# EUROPEAN PATENT SPECIFICATION

(11) **EP 3 217 121 B1**
(45) Date of publication and mention of the grant of the patent: **07.04.2021**
(21) Application number: 17154179.0
(22) Date of filing: 01.02.2017
(51) Int. Cl.: F25B 49/02

(54) **OUTDOOR UNIT FOR AIR CONDITIONER AND METHOD FOR CONTROLLING AIR CONDITIONER**
AUSSENEINHEIT EINER KLIMAANLAGE UND VERFAHREN ZUR STEUERUNG EINER KLIMAANLAGE
UNITÉ EXTÉRIEURE DE CLIMATISEUR D'AIR ET SON PROCÉDÉ DE COMMANDE

(30) Priority: 07.03.2016 JP 2016043153
(43) Date of publication of application: 13.09.2017
(73) Proprietor: Panasonic Intellectual Property Management Co., Ltd., Osaka-shi, Osaka 540-6207 (JP)
(72) Inventor: MATSUI, Masaru, OSAKA, 540-6207 (JP); MASUDA, Tetsuya, OSAKA, 540-6207 (JP); SUITO, Kazuaki, OSAKA, 540-6207 (JP)
(74) Representative: Eisenführ Speiser

(56) References cited:
- EP-A1- 2 886 977
- JP-A- H07 293 971
- US-A- 5 548 968
- US-A1- 2008 022 710
- US-A1- 2010 198 415
- US-A1- 2016 033 179

## Description

### BACKGROUND

### 1. Technical Field

The present disclosure relates to an outdoor unit for an air conditioner including both an engine-driven compressor driven by an engine and an electrically driven compressor driven by electric power, and also relates to a method for controlling the air conditioner.

### 2. Description of the Related Art

When a gas heat pump is operated under partial load conditions, the thermal efficiency of a gas engine drops, and the operational efficiency of the gas heat pump, which serves as an air conditioner, drops accordingly. To avoid this, a so-called hybrid outdoor unit, which includes both an electrically driven compressor and an engine-driven compressor, has been proposed. The electrically driven compressor has a displacement volume smaller than that of the engine-driven compressor, which is driven by the gas engine. The electrically driven compressor is mainly driven under partial load conditions, and the gas engine is mainly driven under high load conditions (see, for example, Japanese Unexamined Patent Application Publication No. 2003-56931 (hereinafter referred to as Patent Document 1) and Fig. 5)

According to Patent Document 1, it is determined whether to drive only an engine-driven compressor 112, only an electrically driven compressor 113, or both the engine-driven compressor 112 and the electrically driven compressor 113 depending on the air conditioning load. The selection between the compressors is made so that a highest operational efficiency can be achieved depending on the required air conditioning load. Accordingly, high efficiency can be achieved irrespective of the air conditioning load.

Moreover, US patent 5,548,968 (hereinafter referred to as Patent Document 2) discloses a refrigeration apparatus. Patent Document 2 forms the closest prior art.

### SUMMARY

However, the structure described in Patent Document 1 has a problem that when the compressors having different displacement volumes, that is, different rated capacities, are simultaneously operated, the operational reliability of the compressor having the lower displacement volume and the lower rated capacity will be reduced.

In general, when a compressor having a high rated capacity is operated alone, a high pressure (discharge pressure) becomes higher and a low pressure (suction pressure) becomes lower than those in the case where a compressor having a low rated capacity is operated alone. Therefore, the difference between the high and low pressures tends to increase. In a cooling operation, variation in the rated capacity of the compressor causes only a small variation in the suction pressure, which is mainly determined by the evaporation temperature of the refrigerant in an indoor unit, but causes a large variation in the discharge pressure.

For example, in a hybrid outdoor unit including an engine-driven compressor having a rated capacity of 20 HP and an electrically driven compressor having a rated capacity of 10 HP, a discharge pressure obtained when the engine-driven compressor having a rated capacity of 20 HP is driven alone in a cooling operation tends to be higher than that obtained when the electrically driven compressor having a rated capacity of 10 HP is driven alone in a cooling operation. The difference in discharge pressure increases as the difference between the operation frequency at which the engine-driven compressor is driven alone and the operation frequency at which the electrically driven compressor is operated increases, that is, as the difference in flow rate between the refrigerant discharged from the engine-driven compressor and the refrigerant discharged from the electrically driven compressor increases.

Therefore, when the two compressors of the above-described hybrid outdoor unit are simultaneously driven and the operation frequency of the electrically driven compressor is reduced, the discharge pressure of the electrically driven compressor significantly increases so as to approach the discharge pressure of the engine-driven compressor. As a result, the electrically driven compressor is operated while the difference between the high and low pressures is greater than that in the case where the electrically driven compressor is driven alone.

When a compressor is operated at a low operation frequency, the amount of lubricant supplied to sliding components included in the compressor decreases, and an oil film cannot be easily formed on bearings. Therefore, when the difference between high and low pressures is large, a large load is placed on the compressor while the sliding components cannot be easily lubricated. As a result, the operational reliability of the electrically driven compressor is reduced.

One non-limiting and exemplary embodiment provides an outdoor unit for an air conditioner as defined in claim 1 and a method for controlling the air conditioner as defined in claim 8. The outdoor unit includes a first compressor and a second compressor having a capacity smaller than that of the first compressor. A discharge pressure of the second compressor is prevented from being increased to a discharge pressure of the first compressor, so that the operational reliability of the second compressor is increased.

According to one aspect of the invention, there is provided an outdoor unit for an air conditioner according to claim 1. According to another aspect of the invention, there is provided a method for controlling an air conditioner according to claim 8.

Accordingly, in a cooling operation in which the first compressor and the second compressor, which has a capacity smaller than that of the first compressor, are simultaneously operated, the flow rate of the refrigerant discharged from the second compressor may be considerably lower than that of the refrigerant discharged from the first compressor. In such a case, the discharge pressure of the second compressor is maintained lower than that of the first compressor by, for example, adjusting the opening degree of the first expansion valve. Therefore, the discharge pressure of the second compressor is not increased to the discharge pressure of the first compressor.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a refrigeration cycle diagram of an air conditioner according to a first embodiment of the present invention;
Fig. 2 is a refrigeration cycle diagram of an air conditioner according to a second embodiment of the present invention;
Fig. 3 is a diagram illustrating the external appearance of an outdoor unit;
Fig. 4 is a refrigeration cycle diagram of an air conditioner according to a third embodiment of the present invention; and

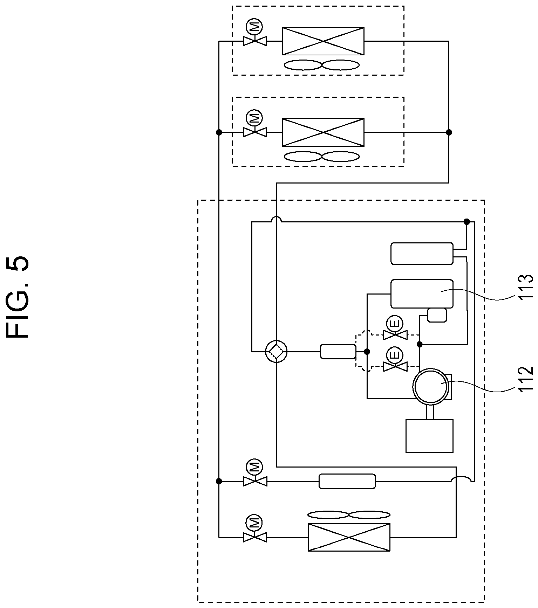

Fig. 5 is a refrigeration cycle diagram of an air conditioner according to the related art.

### DETAILED DESCRIPTION

According to the first aspect of the present invention, an outdoor unit for an air conditioner includes a first compressor; a second compressor that has a capacity smaller than a capacity of the first compressor; a combined suction pipe between the first and second compressors; a first switching unit that switches a flow direction of a refrigerant discharged from the first compressor; a second switching unit that switches a flow direction of the refrigerant discharged from the second compressor; a first outdoor heat exchanger; a second outdoor heat exchanger; a gas-pipe connection port; a liquid-pipe connection port; and a controller. In the cooling operation, the controller causes the first switching unit and the second switching unit to each perform a switching operation in such a manner that the gas-pipe connection port is coupled to the combined suction pipe of the first compressor and the second compressor, and the liquid-pipe connection port is coupled to a discharge pipe of the first compressor via the first outdoor heat exchanger and the first switching unit, and is coupled to a discharge pipe of the second compressor via the second outdoor heat exchanger and the second switching unit.

The first aspect of the present invention may further include a first expansion valve that adjusts an amount of the refrigerant that flows through the first outdoor heat exchanger. In the cooling operation, the controller may cause the first switching unit and the second switching unit to each perform the switching operation in such a manner that the gas-pipe connection port is coupled to the combined suction pipe of the first compressor and the second compressor, and the liquid-pipe connection port is coupled to the discharge pipe of the first compressor via the first expansion valve, the first outdoor heat exchanger and the first switching unit, and is coupled to a discharge pipe of the second compressor via the second outdoor heat exchanger and the second switching unit.

Accordingly, in a cooling operation in which the first compressor and the second compressor, which has a capacity smaller than that of the first compressor, are simultaneously operated, the flow rate of the refrigerant discharged from the second compressor may be considerably lower than that of the refrigerant discharged from the first compressor. In such a case, the discharge pressure of the second compressor is maintained lower than that of the first compressor by, for example, adjusting the opening degree of the first expansion valve (first outdoor-unit pressure reducing valve 130). Therefore, the discharge pressure of the second compressor is not increased to the discharge pressure of the first compressor.

Thus, according to the present invention, an excessive increase in the discharge pressure of the second compressor, which has a capacity smaller than that of the first compressor, can be prevented and the operational reliability of the second compressor can be increased in the cooling operation.

According to a second embodiment, the outdoor unit further includes a bypass circuit that connects a pipe between the first switching unit and the first outdoor heat exchanger to a pipe between the second switching unit and the second outdoor heat exchanger, and an on-off valve that controls a flow through the bypass circuit.

The outdoor unit for the air conditioner may be, for example, a top-blown unit and the cooling operation may be performed while the flow rate of the refrigerant discharged from the first compressor and that of the refrigerant discharged from the second compressor, which has a capacity smaller than that of the first compressor, are at a minimum (the first and second compressors are both driven at the lowest operation frequencies thereof) and while the discharge pressure of the first compressor is equal to that of the second compressor. In such a case, the on-off valve is opened and the second expansion valve is closed so that the refrigerant discharged from the first compressor and the refrigerant discharged from the second compressor are both subjected to heat exchange with the air in the first outdoor heat exchanger, which has a high air flow velocity and high heat exchange performance.

When only the first outdoor heat exchanger is used under such operational conditions, compared to the case in which both the first and second outdoor heat exchangers are used, the heat transfer area is reduced and the heat transfer coefficient is increased due to an increase in the flow velocity of the refrigerant in the first outdoor heat exchanger. The effect of the increase in the heat transfer coefficient is greater than the influence of the reduction in the heat transfer area. Therefore, the amount of heat dissipated into the air from the refrigerant increases, and the discharge pressures of the first and second compressors decrease.

Thus, according to the present invention, in the cooling operation in which the first and second compressors are both operated at the lowest operation frequencies thereof, the discharge pressures of both the first and second compressors are reduced. Accordingly, even when the sliding components of the first and second compressors cannot be easily lubricated, the operational reliability of the first and second compressors can be increased.

When only the first compressor is operated, the on-off valve is closed so that the refrigerant discharged from the first compressor exchanges heat with the air in the first outdoor heat exchanger, which has a high air flow velocity and high heat exchange efficiency. Also when only the second compressor is operated, the on-off valve is opened and the second expansion valve is closed so that the refrigerant discharged from the second compressor exchanges heat with the air in the first outdoor heat exchanger.

Thus, according to the present invention, when the first compressor or the second compressor is operated alone, heat exchange with the outside air is performed in one of the first and second outdoor heat exchangers that has a higher heat exchange performance. Accordingly, the operational efficiency of the air conditioner can be increased.

According to a third embodiment, in the outdoor unit, a heat exchange performance per unit area of the first outdoor heat exchanger is higher than a heat exchange performance per unit area of the second outdoor heat exchanger. The controller opens the on-off valve and closes a second expansion valve (second outdoor-unit pressure reducing valve 131) at an outlet of the second outdoor heat exchanger to cause both the refrigerant discharged from the first compressor and the refrigerant discharged from the second compressor to perform heat exchange in the first outdoor heat exchanger when the first compressor and the second compressor are both operated at low operation frequencies in the cooling operation.

Accordingly, in the cooling operation in which the first and second compressors are both operated at low operation frequencies, the discharge pressures of both the first and second compressors are reduced. Accordingly, even when the sliding components of the first and second compressors cannot be easily lubricated, the operational reliability of the first and second compressors can be increased.

According to a fourth embodiment, in the outdoor unit, the controller closes the on-off valve to cause the refrigerant discharged from the first compressor to perform heat exchange in the first outdoor heat exchanger when the first compressor is operated alone in the cooling operation.

Since the heat exchange with the outside air is performed in the first outdoor heat exchanger having a high heat exchange performance when the first compressor is operated alone in the cooling operation, the operational efficiency of the air conditioner can be increased.

According to a fifth embodiment, in the outdoor unit, the controller opens the on-off valve and closes the second expansion valve at an outlet of the second outdoor heat exchanger to cause the refrigerant discharged from the second compressor to perform heat exchange in the first outdoor heat exchanger when the second compressor is operated alone in the cooling operation.

Since the heat exchange with the outside air is performed in the first outdoor heat exchanger having a high heat exchange performance when the second compressor is operated alone in the cooling operation, the operational efficiency of the air conditioner can be increased.

According to a sixth embodiment, the outdoor unit further includes a third outdoor heat exchanger that causes waste heat of an engine and the refrigerant to exchange heat; a bypass circuit that connects a pipe between the first switching unit and the first outdoor heat exchanger to a pipe between the second switching unit and the second outdoor heat exchanger; an on-off valve that controls a flow through the bypass circuit; a first check valve that is disposed between the first switching unit and the first outdoor heat exchanger and enables a flow only in a direction toward the first outdoor heat exchanger and not in a direction opposite to the direction toward the first outdoor heat exchanger; a second check valve that is disposed between the first switching unit and the gas-pipe connection port and enables a flow only in a direction toward the gas-pipe connection port and not in a direction opposite to the direction toward the gas-pipe connection port; a third check valve that is disposed between the second switching unit and the second outdoor heat exchanger and enables a flow only in a direction toward the second outdoor heat exchanger and not in a direction opposite to direction toward the second outdoor heat exchanger; and a fourth check valve that is disposed between the second switching unit and the gas-pipe connection port and enables a flow only in a direction toward the gas-pipe connection port and not in a direction opposite to the direction toward the gas-pipe connection port. In a defrosting operation, the controller causes the first switching unit and the second switching unit to each perform a switching operation and opens or closes the on-off valve in such a manner that the gas-pipe connection port is coupled to the discharge pipe of the second compressor, the liquid-pipe connection port is coupled to the suction pipe of the first compressor and the suction pipe of the second compressor via the third outdoor heat exchanger, and the liquid-pipe connection port is coupled to the discharge pipe of the first compressor selectively via the second outdoor heat exchanger and the first switching unit or via the first outdoor heat exchanger and first switching unit.

Accordingly, the defrosting operation can be performed while continuing the heating operation.

The method for controlling an air conditioner, according to the second aspect of the invention, includes a first compressor; a second compressor that has a capacity smaller than a capacity of the first compressor; a first switching unit that switches a flow direction of a refrigerant discharged from the first compressor; a second switching unit that switches a flow direction of the refrigerant discharged from the second compressor; a first outdoor heat exchanger; a second outdoor heat exchanger; a gas-pipe connection port; and a liquid-pipe connection port. According to the method, in a cooling operation, the first switching unit and the second switching unit are caused to each perform a switching operation in such a manner that the gas-pipe connection port is coupled to the combined suction pipe of the first compressor and the second compressor, and the liquid-pipe connection port is coupled to a discharge pipe of the first compressor via the first outdoor heat exchanger and the first switching unit, and is coupled to a discharge pipe of the second compressor via the second outdoor heat exchanger and the second switching unit.

The second aspect of the present invention may further include a first expansion valve that adjusts an amount of the refrigerant that flows through the first outdoor heat exchanger. In the cooling operation, the first switching unit and the second switching unit may be caused to each perform a switching operation in such a manner that the gas-pipe connection port is coupled to the combined suction pipe of the first compressor and the second compressor, and the liquid-pipe connection port is coupled to a discharge pipe of the first compressor via the first expansion valve, the first outdoor heat exchanger, and the first switching unit, and is coupled to a discharge pipe of the second compressor via the second outdoor heat exchanger and the second switching unit. Accordingly, in a cooling operation in which the first compressor and the second compressor, which has a capacity smaller than that of the first compressor, are simultaneously operated, the flow rate of the refrigerant discharged from the second compressor may be considerably lower than that of the refrigerant discharged from the first compressor. In such a case, the discharge pressure of the second compressor is maintained lower than that of the first compressor by adjusting the opening degree of the first expansion valve. Therefore, the discharge pressure of the second compressor is not increased to the discharge pressure of the first compressor.

Thus, according to the present invention, an excessive increase in the discharge pressure of the second compressor, which has a capacity smaller than that of the first compressor, can be prevented and the operational reliability of the second compressor can be increased in the cooling operation.

Embodiments of the present invention, will be described with reference to the drawings. The present disclosure is not limited by the embodiments.

### First Embodiment

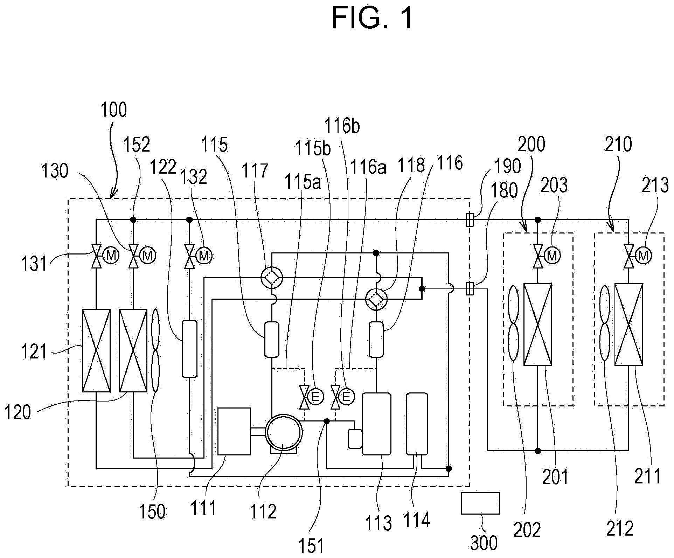

Fig. 1 illustrates the configuration of a refrigeration cycle of an air conditioner according to a first embodiment. The air conditioner illustrated in Fig. 1 has a so-called twin structure in which two indoor units are connected to a single outdoor unit. The configuration of the refrigeration cycle is not limited to that illustrated in Fig. 1. For example, two or more outdoor units and three or more indoor units may be connected in parallel.

An outdoor unit 100 is coupled to indoor units 200 and 210 by pipes through which a refrigerant flows. A controller 300 controls cooling and heating operations. The outdoor unit 100 includes an engine 111 that is driven by gas, a first compressor (engine-driven compressor) 112 that receives driving force from the engine 111 and compresses refrigerant, and a second compressor (electrically driven compressor) 113 that is driven by electric power supplied from, for example, a commercial power supply. The displacement volume of the first compressor 112 is greater than that of the second compressor 113. The first compressor 112 and the second compressor 113 use the same refrigeration oil as lubricant.

An accumulator 114 is connected to a combining point at which a suction pipe of the first compressor 112 and a suction pipe of the second compressor 113 are combined, and to a refrigerant pipe that is opposite the first and second compressors 112 and 113. The accumulator 114 supplies gas refrigerant to the first and second compressors 112 and 113.

A first-compressor oil separator 115 is provided in a discharge pipe of the first compressor 112, and separates refrigeration oil from gas discharged from the first compressor 112. The refrigeration oil separated by the first-compressor oil separator 115 is returned to the suction pipe of the first compressor 112 through a first-compressor oil return pipe 115a. The flow through the first-compressor oil return pipe 115a is controlled by opening and closing an on-off valve 115b for the first-compressor oil return pipe 115a.

A second-compressor oil separator 116 is provided in a discharge pipe of the second compressor 113, and separates refrigeration oil from gas discharged from the second compressor 113. The refrigeration oil separated by the second-compressor oil separator 116 is returned to the suction pipe of the second compressor 113 through a second-compressor oil return pipe 116a. The flow through the second-compressor oil return pipe 116a is controlled by opening and closing an on-off valve 116b for the second-compressor oil return pipe 116a.

The first-compressor oil return pipe 115a and the second-compressor oil return pipe 116a may be combined together so that the refrigeration oil separated by the first-compressor oil separator 115 and the refrigeration oil separated by the second-compressor oil separator 116 are returned to the first compressor 112 and the second compressor 113 together. In this case, the combined refrigeration oil is returned to a point between the accumulator 114 and the combining point at which the suction pipe of the first compressor 112 and the suction pipe of the second compressor 113 are combined.

A first four-way valve 117 switches the path along which the refrigerant discharged from the first compressor 112 flows between a path for a cooling operation and a path for a heating operation. A second four-way valve 118 switches the path along which the refrigerant discharged from the second compressor 113 flows between a path for the cooling operation and a path for the heating operation. In Fig. 1, the refrigerant flows along the paths shown by the solid lines in the cooling operation, and along the paths shown by the dotted lines in the heating operation.

A first outdoor heat exchanger 120 is connected to the first four-way valve 117 at one end thereof, and a second outdoor heat exchanger 121 is connected to the second four-way valve 118 at one end thereof. The first outdoor heat exchanger 120 and the second outdoor heat exchanger 121 are, for example, fin-and-tube heat exchangers or microtube heat exchangers. Outdoor blower fans 150 supply the air around the outdoor unit 100 to the first outdoor heat exchanger 120 and the second outdoor heat exchanger 121, so that heat exchange occurs between the refrigerant that flows through the tubes of the first outdoor heat exchanger 120 and the second outdoor heat exchanger 121 and the air that flows through the fin.

An engine waste heat exchanger 122 transfers heat between high-temperature cooling water that has been used to cool the engine 111 and the refrigerant, and is used in the heating operation. The engine waste heat exchanger 122 may be, for example, a plate-type heat exchanger.

A first outdoor-unit pressure reducing valve 130, which decompresses and expands the refrigerant, is connected to the first outdoor heat exchanger 120. A second outdoor-unit pressure reducing valve 131, which also decompresses and expands the refrigerant, is connected to the second outdoor heat exchanger 121. A refrigerant flow-regulating valve 132 for the engine waste heat exchanger 122 adjusts the flow rate of the refrigerant that flows into the engine waste heat exchanger 122.

The outdoor unit 100 includes two pipe connection ports: a gas-pipe connection port 180 that is connected to a gas pipe through which gas refrigerant mainly flows and a liquid-pipe connection port 190 that is connected to a liquid pipe through which liquid refrigerant mainly flows.

The indoor unit 200 includes an indoor heat exchanger 201, an indoor blower fan 202 that supplies the air around the indoor unit 200 to the indoor heat exchanger 201, and an indoor-unit decompressor 203 that decompresses and expands the refrigerant. Similarly, the indoor unit 210 includes an indoor heat exchanger 211, an indoor blower fan 212 that supplies the air around the indoor unit 210 to the indoor heat exchanger 211, and an indoor-unit decompressor 213 that decompresses and expands the refrigerant.

The operation of the outdoor unit 100 and the indoor units 200 and 210 will now be described.

In the cooling operation, the controller 300 sets the first four-way valve 117 and the second four-way valve 118 so that the refrigerant flows along the paths shown by the solid lines (see Fig. 1). The refrigerant flow-regulating valve 132 for the engine waste heat exchanger 122 is closed so that the refrigerant does not flow through the engine waste heat exchanger 122.

High-temperature high-pressure refrigerant compressed by the first compressor 112 flows into the first-compressor oil separator 115. High-purity gas refrigerant from which the refrigeration oil is separated by the first-compressor oil separator 115 passes through the first four-way valve 117 and enters the first outdoor heat exchanger 120. The gas refrigerant dissipates heat by exchanging heat with the outside air in the first outdoor heat exchanger 120, and is then condensed into high-pressure liquid refrigerant. The high-pressure liquid refrigerant passes through the first outdoor-unit pressure reducing valve 130, is combined with the refrigerant that has passed through the second outdoor-unit pressure reducing valve 131, and is supplied to the indoor units 200 and 210.

High-temperature high-pressure refrigerant compressed by the second compressor 113 flows into the second-compressor oil separator 116. High-purity gas refrigerant from which the refrigeration oil is separated by the second-compressor oil separator 116 passes through the second four-way valve 118 and enters the second outdoor heat exchanger 121. The gas refrigerant dissipates heat by exchanging heat with the outside air in the second outdoor heat exchanger 121, and is then condensed into high-pressure liquid refrigerant. The high-pressure liquid refrigerant passes through the second outdoor-unit pressure reducing valve 131, is combined with the refrigerant that has passed through the first outdoor-unit pressure reducing valve 130, and is supplied to the indoor units 200 and 210.

When the first compressor 112 and the second compressor 113 are simultaneously driven and the flow rate of the refrigerant discharged from the second compressor 113 is considerably lower than that of the refrigerant discharged from the first compressor 112, the second outdoor-unit pressure reducing valve 131 may be fully opened and the opening degree of the first outdoor-unit pressure reducing valve 130 may be reduced. Thus, the discharge pressure of the second compressor 113 is maintained lower than that of the first compressor 112. In other words, the discharge pressure of the second compressor 113 is prevented from being increased to that of the first compressor 112.

The first outdoor-unit pressure reducing valve 130 is controlled, for example, as follows. First, the discharge pressure of the first compressor 112 and the refrigerant temperature at a position between the first outdoor heat exchanger 120 and the first outdoor-unit pressure reducing valve 130 (outlet temperature of the first outdoor heat exchanger 120) are measured. Then, the difference between the refrigerant condensing temperature of the first outdoor heat exchanger 120, which is calculated from the discharge pressure of the first compressor 112, and the outlet temperature of the first outdoor heat exchanger 120, is calculated. In other words, the supercooling degree of the refrigerant that flows out of the first outdoor heat exchanger 120 is calculated. The first outdoor-unit pressure reducing valve 130 is controlled so that the supercooling degree becomes equal to a predetermined value.

When the first compressor 112 is being driven, the on-off valve 115b for the first-compressor oil return pipe 115a is opened so that the refrigeration oil separated by the first-compressor oil separator 115 is returned to the suction pipe of the first compressor 112 through the first-compressor oil return pipe 115a. When the first compressor 112 is not driven, the on-off valve 115b for the first-compressor oil return pipe 115a is closed.

When the second compressor 113 is being driven, the on-off valve 116b for the second-compressor oil return pipe 116a is opened so that the refrigeration oil separated by the second-compressor oil separator 116 is returned to the suction pipe of the second compressor 113 through the second-compressor oil return pipe 116a. When the second compressor 113 is not driven, the on-off valve 116b for the second-compressor oil return pipe 116a is closed.

The high-pressure liquid refrigerant that has entered the indoor unit 200 is decompressed by the indoor-unit decompressor 203 to become gas-liquid two-phase refrigerant, and flows into the indoor heat exchanger 201. The gas-liquid two-phase refrigerant absorbs heat by exchanging heat with the air in the space to be air-conditioned in the indoor heat exchanger 201, and evaporates into gas refrigerant, which flows out of the indoor unit 200.

Similar to the indoor unit 200, also in the indoor unit 210, the high-pressure liquid refrigerant is decompressed by the indoor-unit decompressor 213 to become gas-liquid two-phase refrigerant, and flows into the indoor heat exchanger 211. The gas-liquid two-phase refrigerant absorbs heat by exchanging heat with the air in the space to be air-conditioned in the indoor heat exchanger 211, and evaporates into gas refrigerant, which flows out of the indoor unit 210.

When the cooling operation is performed only by the indoor unit 200, the indoor-unit decompressor 213 is closed and the refrigerant is not supplied to the indoor heat exchanger 211 of the indoor unit 210. When the cooling operation is performed only by the indoor unit 210, the indoor-unit decompressor 203 is closed and the refrigerant is not supplied to the indoor heat exchanger 201 of the indoor unit 200.

The gas refrigerant that flows out of the indoor units 200 and 210 returns to the outdoor unit 100. The gas refrigerant that flows into the outdoor unit 100 is divided into gas refrigerant that flows through the first four-way valve 117 and gas refrigerant that flows through the second four-way valve 118 in the outdoor unit 100. The gas refrigerant that has flowed through the first four-way valve 117 and the gas refrigerant that has flowed through the second four-way valve 118 are combined together. The combined refrigerant passes through the accumulator 114 and returns to the first compressor 112 and the second compressor 113.

The operation of the first compressor 112 and the second compressor 113 performed by the controller 300 in the cooling operation will now be described.

In the case where the cooling load is smaller than the cooling capacity obtained when the first compressor 112 is operated at the lowest operation frequency thereof (minimum cooling capacity of the first compressor 112), intermittent operation will be performed if only the first compressor 112 is operated. Therefore, only the second compressor 113 is operated.

In the case where the cooling load is greater than the minimum cooling capacity of the first compressor 112 and smaller than the cooling capacity obtained when the first compressor 112 and the second compressor 113 are both operated at the lowest operation frequencies thereof (minimum cooling capacity of the first and second compressors 112 and 113), one of the first compressor 112 and second compressor 113 that has, for example, lower operation cost or energy consumption, is selectively operated.

In the case where the cooling load is greater than the minimum cooling capacity of the first and second compressors 112 and 113, the first compressor 112 and the second compressor 113 are both operated so that operation cost or energy consumption, for example, is minimized. In this case, the relationship of the operation frequency of each of the first and second compressors 112 and 113 with the operation cost or energy consumption is used to determine the operation frequency of each of the first and second compressors 112 and 113 at which the operation cost or energy consumption is minimized.

In practice, the ratio of the cooling load allocated to the first compressor 112 to the entire cooling load is about ±15% of the ratio of the cooling capacity obtained when only the first compressor 112 is operated at the maximum operation frequency thereof to the maximum cooling capacity obtained when the first and second compressors 112 and 113 are both operated at the maximum operation frequencies thereof (maximum cooling capacity of the first and second compressors 112 and 113).

In the heating operation, the controller 300 sets the first four-way valve 117 and the second four-way valve 118 so that the refrigerant flows along the paths shown by the dotted lines (see Fig. 1).

High-temperature high-pressure refrigerant compressed by the first compressor 112 flows into the first-compressor oil separator 115. High-purity gas refrigerant from which the refrigeration oil is separated by the first-compressor oil separator 115 passes through the first four-way valve 117, is combined with the refrigerant that has passed through the second four-way valve 118, and is supplied to the indoor units 200 and 210.

High-temperature high-pressure refrigerant compressed by the second compressor 113 flows into the second-compressor oil separator 116. High-purity gas refrigerant from which the refrigeration oil is separated by the second-compressor oil separator 116 passes through the second four-way valve 118, is combined with the refrigerant that has passed through the first four-way valve 117, and is supplied to the indoor units 200 and 210.

The high-temperature high-pressure gas refrigerant that has entered the indoor unit 200 flows into the indoor heat exchanger 201. The high-temperature high-pressure gas refrigerant dissipates heat by exchanging heat with the air in the space to be air-conditioned in the indoor heat exchanger 201, and is condensed into high-pressure liquid refrigerant, which passes through the indoor-unit decompressor 203 and flows out of the indoor unit 200.

Similar to the indoor unit 210, also in the indoor unit 200, the high-temperature high-pressure gas refrigerant flows into the indoor heat exchanger 211. The high-temperature high-pressure gas refrigerant dissipates heat by exchanging heat with the air in the space to be air-conditioned in the indoor heat exchanger 211, and is then condensed into high-pressure liquid refrigerant, which passes through the indoor-unit decompressor 213 and flows out of the indoor unit 210.

Similar to the cooling operation, when the heating operation is performed only by the indoor unit 200, the indoor-unit decompressor 213 is closed and the refrigerant is not supplied to the indoor heat exchanger 211 of the indoor unit 210. When the heating operation is performed only by the indoor unit 210, the indoor-unit decompressor 203 is closed and the refrigerant is not supplied to the indoor heat exchanger 201 of the indoor unit 200.

The high-pressure liquid refrigerant that has flowed out of the indoor units 200 and 210 returns to the outdoor unit 100. The high-pressure liquid refrigerant that has flowed into the outdoor unit 100 branches in front of the first outdoor-unit pressure reducing valve 130, the second outdoor-unit pressure reducing valve 131, and the refrigerant flow-regulating valve 132 for the engine waste heat exchanger 122, and is decompressed by the first outdoor-unit pressure reducing valve 130, the second outdoor-unit pressure reducing valve 131, and the refrigerant flow-regulating valve 132 for the engine waste heat exchanger 122 to become gas-liquid two-phase refrigerant, which flows into the first outdoor heat exchanger 120, the second outdoor heat exchanger 121, and the engine waste heat exchanger 122.

The flow rate of the refrigerant that flows into each of the first outdoor heat exchanger 120, the second outdoor heat exchanger 121, and the engine waste heat exchanger 122 is controlled by controlling the opening degree of each of the first outdoor-unit pressure reducing valve 130, the second outdoor-unit pressure reducing valve 131, and the refrigerant flow-regulating valve 132 for the engine waste heat exchanger 122. The opening degree of the first outdoor-unit pressure reducing valve 130 is controlled so that the difference between the temperatures detected at locations upstream and downstream of the first outdoor heat exchanger 120 approaches a predetermined value. The opening degrees of the second outdoor-unit pressure reducing valve 131 and the refrigerant flow-regulating valve 132 for the engine waste heat exchanger 122 are similarly controlled.

The gas-liquid two-phase refrigerant that has flowed into the first outdoor heat exchanger 120 and the second outdoor heat exchanger 121 absorbs heat by exchanging heat with the outside air and evaporates. The refrigerant that has evaporated in the first outdoor heat exchanger 120 passes through the first four-way valve 117, and is combined with gas refrigerant that has evaporated in the second outdoor heat exchanger 121 and passed through the second four-way valve 118.

The gas-liquid two-phase refrigerant that has flowed into the engine waste heat exchanger 122 absorbs heat by exchanging heat with high-temperature cooling water used to cool the engine 111, and evaporates. The gas refrigerant discharged from the engine waste heat exchanger 122 is combined with the gas refrigerant that has flowed out of the first four-way valve 117 and the second four-way valve 118, and flows into the accumulator 114. The gas refrigerant that has flowed out of the accumulator 114 returns to the first compressor 112 and the second compressor 113.

The operation of the first compressor 112 and the second compressor 113 performed by the controller 300 in the heating operation will now be described.

In the case where the heating load is smaller than the heating capacity obtained when the first compressor 112 is operated at the lowest operation frequency thereof (minimum heating capacity of the first compressor 112), intermittent operation will be performed if only the first compressor 112 is operated. Therefore, only the second compressor 113 is operated.

In the case where the heating load is greater than the minimum heating capacity of the first compressor 112 and smaller than the heating capacity obtained when the first compressor 112 and the second compressor 113 are both operated at the lowest operation frequencies thereof (minimum heating capacity of the first and second compressors 112 and 113), one of the first compressor 112 and second compressor 113 that has, for example, lower operation cost or energy consumption, is selectively operated.

In the case where the heating load is greater than the minimum heating capacity of the first and second compressors 112 and 113, the first compressor 112 and the second compressor 113 are both operated so that operation cost or energy consumption, for example, is minimized. In this case, the relationship of the operation frequency of each of the first and second compressors 112 and 113 with the operation cost or energy consumption is used to determine the operation frequency of each of the first and second compressors 112 and 113 at which the operation cost or energy consumption is minimized.

In practice, the ratio of the heating load allocated to the first compressor 112 to the entire heating load is about ±15% of the ratio of the heating capacity obtained when only the first compressor 112 is operated at the maximum operation frequency thereof to the maximum heating capacity obtained when the first and second compressors 112 and 113 are both operated at the maximum operation frequencies thereof (maximum heating capacity of the first and second compressors 112 and 113).

During the heating operation, frost conditions of the first outdoor heat exchanger 120 and the second outdoor heat exchanger 121 are constantly monitored. If there is a risk of frost, the operation frequency of the first compressor 112 is increased and the operation frequency of the second compressor 113 is reduced even when the operation frequencies of the first and second compressors 112 and 113 are set so as to minimize the operation cost or energy consumption.

When the operation frequency of the first compressor 112 is increased, the amount of waste heat of the engine 111 increases, and the amount of heat of the cooling water supplied to the engine waste heat exchanger 122 increases accordingly. Therefore, a larger amount of refrigerant can be evaporated in the engine waste heat exchanger 122, so that the amount of refrigerant that flows through the first outdoor heat exchanger 120 and the second outdoor heat exchanger 121 can be reduced. Thus, the risk of frost is reduced.

As is clear from the above description, according to the present embodiment, when the cooling operation is performed by simultaneously driving the first compressor 112 and the second compressor 113, the flow rate of the refrigerant discharged from the second compressor 113 may be considerably lower than that of the refrigerant discharged from the first compressor 112. Even in such a case, the discharge pressure of the second compressor 113 is maintained lower than that of the first compressor 112 by fully opening the second outdoor-unit pressure reducing valve 131 and reducing the opening degree of the first outdoor-unit pressure reducing valve 130. Thus, the discharge pressure of the second compressor 113 is prevented from being increased to that of the first compressor 112.

Accordingly, in the cooling operation in which the operation frequency of the second compressor 113 is low, an excessive increase in the discharge pressure of the second compressor 113 can be prevented, and reduction in the operational reliability of the second compressor 113 can be suppressed.

Since the discharge pressure of the second compressor 113 is not increased to the discharge pressure of the first compressor 112 irrespective of the operation frequency of the second compressor 113, reduction in the operational efficiency of the second compressor 113 can be prevented.

Another expression of the outdoor unit for an air conditioner according to the first embodiment includes a pipe in which a refrigerant flows, the pipe constituting passages; a first compressor; a second compressor; a first outdoor heat exchanger; a second outdoor heat exchanger; a switching unit that is connected to the pipe; and a controller that controls the switching unit to select a first passage from the passages in a cooling operation. The first passage includes a first portion (151) and a second portion (152). The first passage branches into a first branch passage and a second branch passage at the first portion. The first branch passage and the second branch passage are combined with each other at the second portion. The first portion, the first compressor, the first outdoor heat exchanger, and the second portion are present in this order in the first branch passage. The first portion, the second compressor, the second outdoor heat exchanger, and the second portion are present in this order in the second branch passage. The outdoor unit for the air conditioner may further includes, for example, at least one selected from the group consisting of a first expansion valve that is present in the first branch passage and that adjusts an amount of the refrigerant that flows through the first outdoor heat exchanger, and a second expansion valve that is present in the second branch passage and that adjusts an amount of the refrigerant that flows through the second outdoor heat exchanger. The controller may perform a control such that the discharge pressure of the second compressor is maintained lower than that of the first compressor by, for example, adjusting the opening degree of the first expansion valve and/or the opening degree of the second expansion valve.

### Second Embodiment

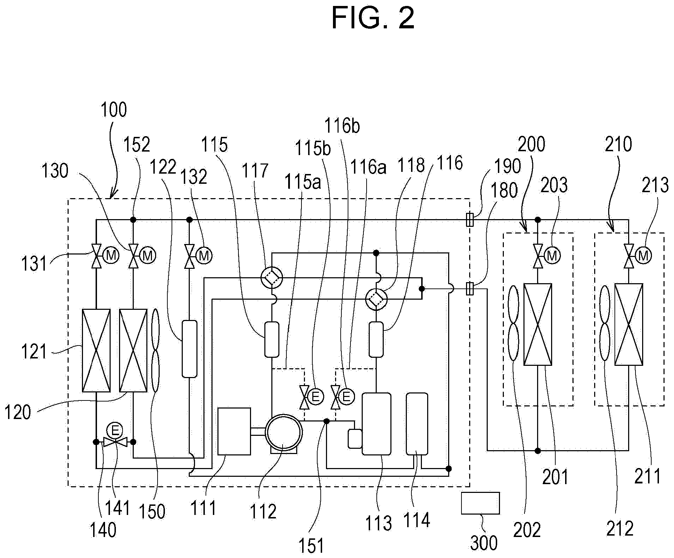

Fig. 2 is a refrigeration cycle diagram of an air conditioner according to a second embodiment. Fig. 2 differs from Fig. 1 in that a bypass pipe 140 connects a pipe that extends between the first four-way valve 117 and the first outdoor heat exchanger 120 to a pipe that extends between the second four-way valve 118 and the second outdoor heat exchanger 121, and a bypass-pipe on-off valve 141 is provided in the bypass pipe 140. Other components are the same as those in Fig. 1. These components are denoted by the same reference numerals as those in Fig. 1, and description thereof is thus omitted.

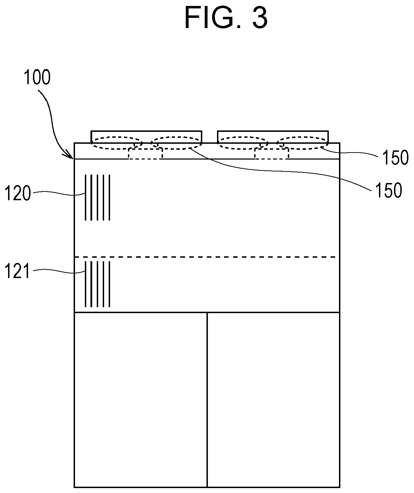

Fig. 3 illustrates the external appearance of the outdoor unit 100. The outdoor unit 100 is a so-called top-blown outdoor unit. When the outdoor blower fans 150, which are disposed in the upper section of the unit, are rotated, the pressure in the outdoor unit 100 is reduced to a negative pressure, so that the ambient air of the outdoor unit 100 is introduced into the outdoor unit 100 through the first outdoor heat exchanger 120 and the second outdoor heat exchanger 121. The air is subjected to heat exchange by the first and second heat exchangers 120 and 121, and is then blown upward by the outdoor blower fans 150.

As illustrated in Fig. 3, the first outdoor heat exchanger 120 has an opening area larger than that of the second outdoor heat exchanger 121, and is closer to the outdoor blower fans 150 than the second outdoor heat exchanger 121 is. In general, when a heat exchanger is disposed on a side surface of a top-blown outdoor unit, the flow velocity of the air that passes through the heat exchanger increases toward the top, that is, as the distance to the fan decreases. Accordingly, the heat exchange performance per unit area of the first outdoor heat exchanger 120 is higher than that of the second outdoor heat exchanger 121.

The operations of the outdoor unit 100 in the cooling and heating operations are basically the same as those in the first embodiment. Here, the operation of the bypass-pipe on-off valve 141 in the cooling operation will be described.

As described above in the first embodiment, in the case where the cooling load is greater than the minimum cooling capacity of the first and second compressors 112 and 113, the first and second compressors 112 and 113 are both operated so that the operation cost or energy consumption, for example, is minimized. The operation cost may be minimized when the cooling load is equal to the minimum cooling capacity of the first and second compressors 112 and 113 and when the first and second compressors 112 and 113 are both operated at the lowest operation frequencies thereof.

In the present embodiment, when the first and second compressors 112 and 113 are both operated at the lowest operation frequencies thereof, the bypass-pipe on-off valve 141 is opened and the second outdoor-unit pressure reducing valve 131 is fully closed. Accordingly, the refrigerant discharged from the second compressor 113 passes through the second-compressor oil separator 116 and the second four-way valve 118, and then passes through the bypass pipe 140. Then, the refrigerant flows into the first outdoor heat exchanger 120, which has a higher heat exchange performance per unit area than the second outdoor heat exchanger 121, together with the refrigerant discharged from the first compressor 112, and is subjected to heat exchange.

When only the first outdoor heat exchanger 120 is used under such operational conditions, compared to the case in which both the first and second outdoor heat exchangers 120 and 121 are used, the heat transfer area is reduced and the heat transfer coefficient is increased due to an increase in the flow velocity of the refrigerant in the first outdoor heat exchanger 120. The effect of the increase in the heat transfer coefficient is greater than the effect of the reduction in the heat transfer area. Therefore, the amount of heat dissipated into the air from the refrigerant increases, and the discharge pressures of the first and second compressors 112 and 113 decrease.

In the case where the cooling load is smaller than the cooling capacity obtained when the first compressor 112 is operated at the lowest operation frequency thereof (minimum cooling capacity of the first compressor 112), intermittent operation will be performed if only the first compressor 112 is operated. Therefore, only the second compressor 113 is driven.

At this time, the bypass-pipe on-off valve 141 is opened, and the second outdoor-unit pressure reducing valve 131 is fully closed. Accordingly, the refrigerant discharged from the second compressor 113 passes through the second-compressor oil separator 116 and the second four-way valve 118, and then passes through the bypass pipe 140. Then, the refrigerant flows into the first outdoor heat exchanger 120, and is condensed.

The heat exchange performance per unit area of the first outdoor heat exchanger 120 is higher than that of the second outdoor heat exchanger 121. Therefore, the operational efficiency of the air conditioner is higher than that in the case where the refrigerant discharged from the second compressor 113 is subjected to heat exchange in the second outdoor heat exchanger 121.

When the cooling load is greater than the minimum cooling capacity of the first compressor 112 and only the first compressor 112 is driven, the bypass-pipe on-off valve 141 is closed. Accordingly, the refrigerant discharged from the first compressor 112 passes through the first-compressor oil separator 115 and the first four-way valve 117, flows into the first outdoor heat exchanger 120, which has a high heat exchange performance, and is condensed.

When the cooling operation is performed by simultaneously driving the first and second compressors 112 and 113, the bypass-pipe on-off valve 141 is closed. The bypass-pipe on-off valve 141 is closed also when the heating operation is performed.

As is clear from the above description, in the present embodiment, when the cooling operation is performed by driving both the first and second compressors 112 and 113 at the lowest operation frequencies thereof, the refrigerant discharged from the first compressor 112 and the refrigerant discharged from the second compressor 113 are both subjected to heat exchange only in the first outdoor heat exchanger 120, which has a higher heat exchange performance per unit area than the second outdoor heat exchanger 121. Thus the discharge pressures of the first and second compressors 112 and 113 are reduced.

Accordingly, even when the cooling operation is performed by driving both the first and second compressors 112 and 113 at the lowest operation frequencies thereof and the sliding components of the first and second compressors 112 and 113 cannot be easily lubricated, the operational reliability of the first and second compressors 112 and 113 can be increased.

When the cooling load is small and only the first compressor 112 or the second compressor 113 is operated, the refrigerant discharged from the first compressor 112 or the second compressor 113 is subjected to heat exchange in the first outdoor heat exchanger 120, which has a high air flow velocity and high heat exchange efficiency.

Thus, the operational efficiency of the air conditioner can be increased even when only the second compressor 113 is operated in the cooling operation.

### Third Embodiment

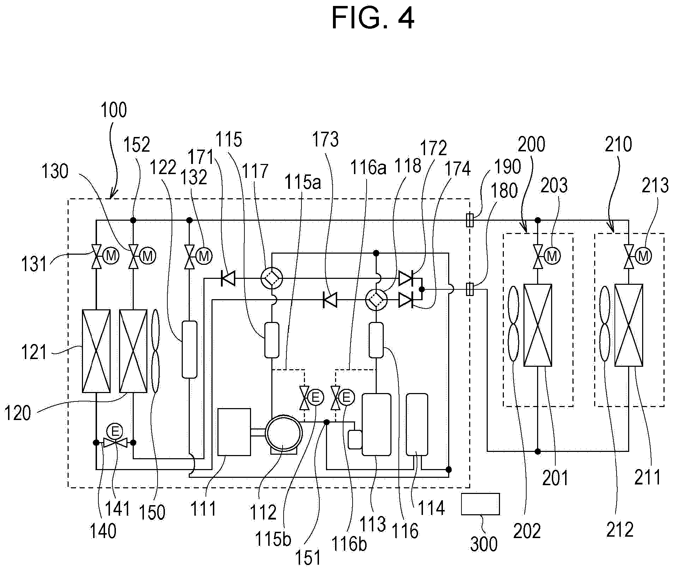

Fig. 4 is a refrigeration cycle diagram of an air conditioner according to a third embodiment. Fig. 4 differs from Fig. 2 according to the second embodiment in that a first check valve 171, a second check valve 172, a third check valve 173, and a fourth check valve 174 are provided. The first check valve 171 is disposed between the first four-way valve 117 and the first outdoor heat exchanger 120. The second check valve 172 is disposed between the first four-way valve 117 and the gas-pipe connection port 180. The third check valve 173 is disposed between the second four-way valve 118 and the second outdoor heat exchanger 121. The fourth check valve 174 is disposed between the second four-way valve 118 and the gas-pipe connection port 180.

The first check valve 171 allows the refrigerant that has been discharged from the first compressor 112 and passed through the first-compressor oil separator 115 and the first four-way valve 117 to flow only in a direction toward the first outdoor heat exchanger 120 and not in the opposite direction. The second check valve 172 allows the refrigerant that has been discharged from the first compressor 112 and passed through the first-compressor oil separator 115 and the first four-way valve 117 to flow only in a direction toward the gas-pipe connection port 180 and not in the opposite direction.

The third check valve 173 allows the refrigerant that has been discharged from the second compressor 113 and passed through the second-compressor oil separator 116 and the second four-way valve 118 to flow only in a direction toward the second outdoor heat exchanger 121 and not in the opposite direction. The fourth check valve 174 allows the refrigerant that has been discharged from the second compressor 113 and passed through the second-compressor oil separator 116 and the second four-way valve 118 to flow only in a direction toward the gas-pipe connection port 180 and not in the opposite direction.

Other components are the same as those in Fig. 2. These components are denoted by the same reference numerals as those in Fig. 2, and description thereof is thus omitted.

The operations of the outdoor unit 100 and the indoor units 200 and 210 will now be described. The operations performed when the controller 300 carries out a cooling operation are the same as those in the first and second embodiments, and description thereof is thus omitted.

Similar to the first embodiment, in the heating operation, the controller 300 sets the first four-way valve 117 and the second four-way valve 118 so that the refrigerant flows along the paths shown by the dotted lines (see Fig. 1).

When it is determined that a defrosting operation for defrosting the first outdoor heat exchanger 120 and the second outdoor heat exchanger 121 needs to be performed based on the frost conditions of the first outdoor heat exchanger 120 and the second outdoor heat exchanger 121, the controller 300 performs the defrosting operation. First, the controller 300 stops the engine 111, the first compressor 112, and the second compressor 113, and switches only the first four-way valve 117 so that the refrigerant flows through the paths shown by the solid lines.

Next, the first outdoor-unit pressure reducing valve 130 is opened, the second outdoor-unit pressure reducing valve 131 is closed, the refrigerant flow-regulating valve 132 for the engine waste heat exchanger 122 is opened, and the bypass-pipe on-off valve 141 is closed. Then, the engine 111, the first compressor 112, and the second compressor 113 are activated.

High-temperature high-pressure gas refrigerant discharged from the first compressor 112 passes through the first-compressor oil separator 115, the first four-way valve 117, and the first check valve 171, and then flows into the first outdoor heat exchanger 120 to defrost the first outdoor heat exchanger 120. The gas refrigerant is cooled and becomes high-pressure liquid refrigerant, which passes through the first outdoor-unit pressure reducing valve 130 and the refrigerant flow-regulating valve 132 for the engine waste heat exchanger 122 and flows into the engine waste heat exchanger 122 (third outdoor heat exchanger).

High-temperature high-pressure gas refrigerant discharged from the second compressor 113 passes through the second-compressor oil separator 116, the second four-way valve 118, and the fourth check valve 174, and is supplied to the indoor units 200 and 210.

The high-temperature high-pressure gas refrigerant that has entered the indoor units 200 and 210 flows into the indoor heat exchangers 201 and 211. The high-temperature high-pressure gas refrigerant dissipates heat by exchanging heat with the air in the spaces to be air-conditioned in the indoor heat exchangers 201 and 211, and is condensed into high-pressure liquid refrigerant, which passes through the indoor-unit decompressors 203 and 213 and flows out of the indoor units 200 and 210. The high-pressure liquid refrigerant that has flowed out of the indoor units 200 and 210 passes through the liquid-pipe connection port 190 and is combined with the liquid refrigerant that has flowed out of the first outdoor-unit pressure reducing valve 130. The combined liquid refrigerant passes through the refrigerant flow-regulating valve 132 for the engine waste heat exchanger 122 and flows into the engine waste heat exchanger 122.

The liquid refrigerant that has flowed into the engine waste heat exchanger 122 absorbs heat by exchanging heat with the high-temperature cooling water used to cool the engine 111, and evaporates. The gas refrigerant discharged from the engine waste heat exchanger 122 flows into the accumulator 114. The gas refrigerant that has flowed out of the accumulator 114 returns to the first compressor 112 and the second compressor 113.

After the first outdoor heat exchanger 120 has been defrosted, the second outdoor-unit pressure reducing valve 131 is opened and the first outdoor-unit pressure reducing valve 130 is closed to start defrosting the second outdoor heat exchanger 121. The bypass-pipe on-off valve 141 is opened.

High-temperature high-pressure gas refrigerant discharged from the first compressor 112 passes through the first-compressor oil separator 115, the first four-way valve 117, the first check valve 171, and the bypass-pipe on-off valve 141, and then flows into the second outdoor heat exchanger 121 to defrost the second outdoor heat exchanger 121. The gas refrigerant is cooled and becomes high-pressure liquid refrigerant, which passes through the second outdoor-unit pressure reducing valve 131 and the refrigerant flow-regulating valve 132 for the engine waste heat exchanger 122 and flows into the engine waste heat exchanger 122. After that, the refrigerant flows in a manner similar to that in the defrosting operation for defrosting the first outdoor heat exchanger 120.

As is clear from the above description, according to the present embodiment, the first check valve 171, the second check valve 172, the third check valve 173, and the fourth check valve 174, for example, are added to the structure of the second embodiment (Fig. 2). When the first outdoor heat exchanger 120 and the second outdoor heat exchanger 121 are to be defrosted, only the first four-way valve 117 is switched so as to make the refrigerant flow along the paths shown by the solid lines. Accordingly, the first outdoor heat exchanger 120 and the second outdoor heat exchanger 121 can be defrosted while continuing the heating operation for the indoor units 200 and 210.

The present invention can be appropriately applied to an air conditioner that operates with high reliability in a cooling operation.

## Claims

1. An outdoor unit (100) for an air conditioner, comprising:
a first compressor (112);
a second compressor (113) that has a capacity smaller than a capacity of the first compressor (112);
a first switching unit (117) that switches a flow direction of a refrigerant discharged from the first compressor (112);
a second switching unit (118) that switches a flow direction of the refrigerant discharged from the second compressor (113);
a first outdoor heat exchanger (120);
a second outdoor heat exchanger (121);
a gas-pipe connection port (180);
a liquid-pipe connection port (190); and
a controller (300), wherein
the liquid-pipe connection port (190) is coupled to a discharge pipe of the first compressor (112) via the first outdoor heat exchanger (120) and the first switching unit (117), and is coupled to a discharge pipe of the second compressor (113) via the second outdoor heat exchanger (121) and the second switching unit (118),
**characterized in that** the first compressor (112) and the second compressor (113) have a combined suction pipe; and **in**
**that**, in a cooling operation, the controller (300) causes the first switching unit (117) and the second switching unit (118) to each perform a switching operation in such a manner that the gas-pipe connection port (180) is coupled to the
combined suction pipe of the first and second compressors (112, 113) via the first and second switching units (117, 118).

2. The outdoor unit (100) according to claim 1, further comprising:
a bypass circuit (140) that connects a pipe between the first switching unit (117) and the first outdoor heat exchanger (120) to a pipe between the second switching unit (118) and the second outdoor heat exchanger (121); and
an on-off valve (141) that controls a flow through the bypass circuit (140).

3. The outdoor unit (100) according to claim 2, wherein a heat exchange performance per unit area of the first outdoor heat exchanger (120) is higher than a heat exchange performance per unit area of the second outdoor heat exchanger (121), and
wherein the controller (300) opens the on-off valve (141) and closes a second expansion valve (131) at an outlet of the second outdoor heat exchanger (121) to cause both the refrigerant discharged from the first compressor (112) and the refrigerant discharged from the second compressor (113) to perform heat exchange in the first outdoor heat exchanger (120) when the first compressor (112) and the second compressor (113) are both operated at low operation frequencies in the cooling operation.

4. The outdoor unit (100) according to claim 2 or 3, wherein the controller (300) closes the on-off valve (141) to cause the refrigerant discharged from the first compressor (112) to perform heat exchange in the first outdoor heat exchanger (120) when the first compressor (112) is operated alone.

5. The outdoor unit (100) according to claim 2 or 3, wherein the controller (300) opens the on-off valve (141) and closes the second expansion valve (131) at the outlet of the second outdoor heat exchanger (121) to cause the refrigerant discharged from the second compressor (113) to perform heat exchange in the first outdoor heat exchanger (120) when the second compressor (113) is operated alone.

6. The outdoor unit (100) according to claim 1, further comprising:
a third outdoor heat exchanger that causes waste heat of an engine and the refrigerant to exchange heat;
a bypass circuit (140) that connects a pipe between the first switching unit (117) and the first outdoor heat exchanger (120) to a pipe between the second switching unit (118) and the second outdoor heat exchanger (121);
an on-off valve (141) that controls a flow through the bypass circuit (140);
a first check valve that is disposed between the first switching unit (117) and the first outdoor heat exchanger (120) and enables a flow only in a direction toward the first outdoor heat exchanger (120) and not in a direction opposite to the direction toward the first outdoor heat exchanger (120); and
a second check valve that is disposed between the first switching unit (117) and the gas-pipe connection port (180) and enables a flow only in a direction toward the gas-pipe connection port (180) and not in a direction opposite to the direction toward the gas-pipe connection port (180);
a third check valve that is disposed between the second switching unit (118) and the second outdoor heat exchanger (121) and enables a flow only in a direction toward the second outdoor heat exchanger (121) and not in a direction opposite to the direction toward the second outdoor heat exchanger (121); and
a fourth check valve that is disposed between the second switching unit (118) and the gas-pipe connection port (180) and enables a flow only in a direction toward the gas-pipe connection port (180) and not in a direction opposite to the direction toward the gas-pipe connection port (180), wherein
in a defrosting operation, the controller (300) causes the first switching unit (117) and the second switching unit (118) to each perform a switching operation and opens or closes the on-off valve (141) in such a manner that
the gas-pipe connection port (180) is coupled to the discharge pipe of the second compressor (113),
the liquid-pipe connection port (190) is coupled to the suction pipe of the first compressor (112) and the suction pipe of the second compressor (113) via the third outdoor heat exchanger, and
the liquid-pipe connection port (190) is coupled to the discharge pipe of the first compressor (112) selectively via the second outdoor heat exchanger (121) and the first switching unit (117) or via the first outdoor heat exchanger (120) and first switching unit (117).

7. The outdoor unit (100) according to any one of claims 1 to 6, further comprising:
a first expansion valve (130) that adjusts an amount of the refrigerant that flows through the first outdoor heat exchanger (120).

8. A method for controlling an air conditioner including
a first compressor (112),
a second compressor (113) that has a capacity smaller than a capacity of the first compressor (112) whereby the first compressor (112) and the second compressor (113) have a combined suction pipe,
a first switching unit (117) that switches a flow direction of a refrigerant discharged from the first compressor (112),
a second switching unit (118) that switches a flow direction of the refrigerant discharged from the second compressor (113),
a first outdoor heat exchanger (120),
a second outdoor heat exchanger (121),
a gas-pipe connection port (180), and
a liquid-pipe connection port (190),
the method comprising:
in a cooling operation, causing the first switching unit (117) and the second switching unit (118) to each perform a switching operation in such a manner that
the gas-pipe connection port (180) is coupled to the combined suction pipe of the first and second compressors (112, 113) via the first and second switching units (117, 118), and
the liquid-pipe connection port (190) is coupled to a discharge pipe of the first compressor (112) via the first outdoor heat exchanger (120) and the first switching unit (117), and is coupled to a discharge pipe of the second compressor (113) via the second outdoor heat exchanger (121) and the second switching unit (118).

## Patentansprüche

1. Außeneinheit (100) für eine Klimaanlage, umfassend:
einen ersten Kompressor (112);
einen zweiten Kompressor (113), der eine Leistungsfähigkeit aufweist, die kleiner ist als die Leistungsfähigkeit des ersten Kompressors (112);
eine erste Schalteinheit (117), die eine Strömungsrichtung eines von dem ersten Kompressor (112) abgegebenen Kältemittels umschaltet;
eine zweite Schalteinheit (118), die eine Strömungsrichtung des von dem zweiten Kompressor (113) abgegebenen Kältemittels umschaltet;
einen ersten Außen-Wärmetauscher (120);
einen zweiten Außen-Wärmetauscher (121);
einen Gasleitungs-Verbindungsanschluss (180);
einen Flüssigkeitsleitungs-Verbindungsanschluss (190); und
eine Steuervorrichtung (300), wobei
der Flüssigkeitsleitungs-Verbindungsanschluss (190) über den ersten Außen-Wärmetauscher (120) und die erste Schalteinheit (117) mit einer Auslassleitung des ersten Kompressors (112) verbunden ist und über den zweiten Außen-Wärmetauscher (121) und die zweite Schalteinheit (118) mit einer Auslassleitung des zweiten Kompressors (113) verbunden ist,
**dadurch gekennzeichnet,**
**dass** der erste Kompressor (112) und der zweite Kompressor (113) eine kombinierte Saugleitung aufweisen; und
**dass** in einem Kühlbetrieb die Steuervorrichtung (300) bewirkt, dass die erste Schalteinheit (117) und die zweite Schalteinheit (118) jeweils einen Schaltvorgang in der Weise durchführen, dass der Gasleitungs-Verbindungsanschluss (180) über die erste und zweite Schalteinheit (117, 118) mit der kombinierten Saugleitung des ersten und zweiten Kompressors (112, 113) verbunden ist.

2. Außeneinheit (100) nach Anspruch 1, weiter umfassend:
einen Bypass-Kreislauf (140), der eine Leitung zwischen der ersten Schalteinheit (117) und dem ersten Außen-Wärmetauscher (120) mit einer Leitung zwischen der zweiten Schalteinheit (118) und dem zweiten Außen-Wärmetauscher (121) verbindet; und
ein Ein/Aus-Ventil (141), das eine Strömung durch den Bypass-Kreislauf (140) steuert.

3. Außeneinheit (100) nach Anspruch 2, wobei eine Wärmeaustauschleistung pro Flächeneinheit des ersten Außen-Wärmetauschers (120) höher ist als eine Wärmeaustauschleistung pro Flächeneinheit des zweiten Außen-Wärmetauschers (121), und
wobei die Steuervorrichtung (300) das Ein/Aus-Ventil (141) öffnet und ein zweites Expansionsventil (131) an einem Auslass des zweiten Außen-Wärmetauschers (121) schließt, um zu bewirken, dass sowohl das von dem ersten Kompressor (112) abgegebene Kältemittel als auch das von dem zweiten Kompressor (113) abgegebene Kältemittel einen Wärmeaustausch im ersten Außen-Wärmetauscher (120) durchführen, wenn der erste Kompressor (112) und der zweite Kompressor (113) beide bei niedrigen Betriebsfrequenzen im Kühlbetrieb betrieben werden.

4. Außeneinheit (100) nach Anspruch 2 oder 3, wobei die Steuervorrichtung (300) das Ein/Aus-Ventil (141) schließt, um zu bewirken, dass das von dem ersten Kompressor (112) abgegebene Kältemittel einen Wärmeaustausch im ersten Außen-Wärmetauscher (120) durchführt, wenn der erste Kompressor (112) allein betrieben wird.

5. Außeneinheit (100) nach Anspruch 2 oder 3, wobei die Steuervorrichtung (300) das Ein/Aus-Ventil (141) öffnet und das zweite Expansionsventil (131) am Auslass des zweiten Außen-Wärmetauschers (121) schließt, um zu bewirken, dass das vom zweiten Kompressor (113) abgegebene Kältemittel einen Wärmeaustausch im ersten Außen-Wärmetauscher (120) durchführt, wenn der zweite Kompressor (113) allein betrieben wird.

6. Außeneinheit (100) nach Anspruch 1, weiter umfassend:
einen dritten Außen-Wärmetauscher, der einen Wärmeaustausch zwischen der Abwärme einer Maschine und dem Kältemittel bewirkt;
einen Bypass-Kreislauf (140), der eine Leitung zwischen der ersten Schalteinheit (117) und dem ersten Außenwärmetauscher (120) mit einer Leitung zwischen der zweiten Schalteinheit (118) und dem zweiten Außenwärmetauscher (121) verbindet;
ein Ein/Aus-Ventil (141), das eine Strömung durch den Bypass-Kreislauf (140) steuert;
ein erstes Rückschlagventil, das zwischen der ersten Schalteinheit (117) und dem ersten Außenwärmetauscher (120) angeordnet ist und eine Strömung nur in einer Richtung zu dem ersten Außen-Wärmetauscher (120) und nicht in einer Richtung entgegengesetzt zu der Richtung zu dem ersten Außen-Wärmetauscher (120) ermöglicht; und
ein zweites Rückschlagventil, das zwischen der ersten Schalteinheit (117) und dem Gasleitungs-Verbindungsanschluss (180) angeordnet ist und eine Strömung nur in einer Richtung zu dem Gasleitungs-Verbindungsanschluss (180) und nicht in einer Richtung entgegengesetzt zu der Richtung zu dem Gasleitungs-Verbindungsanschluss (180) ermöglicht;
ein drittes Rückschlagventil, das zwischen der zweiten Schalteinheit (118) und dem zweiten Außen-Wärmetauscher (121) angeordnet ist und eine Strömung nur in einer Richtung zu dem zweiten Außen-Wärmetauscher (121) und nicht in einer Richtung entgegengesetzt zu der Richtung zu dem zweiten Außen-Wärmetauscher (121) ermöglicht; und
ein viertes Rückschlagventil, das zwischen der zweiten Schalteinheit (118) und dem Gasleitungs-Verbindungsanschluss (180) angeordnet ist und eine Strömung nur in einer Richtung zu dem Gasleitungs-Verbindungsanschluss (180) und nicht in einer Richtung entgegengesetzt zu der Richtung zu dem Gasleitungs-Verbindungsanschluss (180) ermöglicht, wobei,
bei einem Abtauvorgang die Steuervorrichtung (300) bewirkt, dass die erste Schalteinheit (117) und die zweite Schalteinheit (118) jeweils einen Schaltvorgang durchführen, und das Ein/Aus-Ventil (141) derart öffnet oder schließt, dass
der Gasleitungs-Verbindungsanschluss (180) mit der Auslassleitung des zweiten Kompressors (113) verbunden ist,
der Flüssigkeitsleitungs-Verbindungsanschluss (190) mit der Saugleitung des ersten Kompressors (112) und der Saugleitung des zweiten Kompressors (113) über den dritten Außen-Wärmetauscher verbunden ist, und
der Flüssigkeitsleitungs-Verbindungsanschluss (190) wahlweise über den zweiten Außen-Wärmetauscher (121) und die erste Schalteinheit (117) oder über den ersten Außen-Wärmetauscher (120) und die erste Schalteinheit (117) mit der Auslassleitung des ersten Kompressors (112) verbunden ist.

7. Außeneinheit (100) nach einem der Ansprüche 1 bis 6, weiter umfassend:
ein erstes Expansionsventil (130), das eine Menge des Kältemittels einstellt, die durch den ersten Außen-Wärmetauscher (120) fließt.

8. Verfahren zum Steuern einer Klimaanlage, umfassend
einen ersten Kompressor (112),
einen zweiten Kompressor (113), der eine Leistungsfähigkeit aufweist, die kleiner ist als eine Leistungsfähigkeit des ersten Kompressors (112), wobei der erste Kompressor (112) und der zweite Kompressor (113) eine kombinierte Saugleitung aufweisen,
eine erste Schalteinheit (117), die eine Strömungsrichtung eines von dem ersten Kompressor (112) abgegebenen Kältemittels umschaltet,
eine zweite Schalteinheit (118), die eine Strömungsrichtung des von dem zweiten Kompressor (113) abgegebene Kältemittels umschaltet,
einen ersten Außen-Wärmetauscher (120),
einen zweiten Außen-Wärmetauscher (121),
einen Gasleitungs-Verbindungsanschluss (180), und
einen Flüssigkeitsleitungs-Verbindungsanschluss (190),
wobei das Verfahren umfasst:
Bewirken, dass in einem Kühlvorgang die erste Schalteinheit (117) und die zweite Schalteinheit (118) jeweils einen Schaltvorgang in einer solchen Weise durchführen, dass
der Gasleitungs-Verbindungsanschluss (180) über die erste und die zweite Schalteinheit (117, 118) mit der kombinierten Saugleitung des ersten und des zweiten Kompressors (112, 113) verbunden ist, und
der Flüssigkeitsleitungs-Verbindungsanschluss (190) über den ersten Außen-Wärmetauscher (120) und die erste Schalteinheit (117) mit einer Auslassleitung des ersten Kompressors (112) verbunden ist und über den zweiten Außen-Wärmetauscher (121) und die zweite Schalteinheit (118) mit einer Auslassleitung des zweiten Kompressors (113) verbunden ist.

## Revendications

1. Unité extérieure (100) pour un climatiseur, comprenant :
un premier compresseur (112) ;
un deuxième compresseur (113) qui présente une capacité inférieure à une capacité du premier compresseur (112) ;
une première unité de commutation (117) qui commute un sens d'écoulement d'un fluide frigorigène évacué par le premier compresseur (112) ;
une deuxième unité de commutation (118) qui commute un sens d'écoulement du fluide frigorigène évacué par le deuxième compresseur (113) ;
un premier échangeur de chaleur extérieur (120) ;
un deuxième échangeur de chaleur extérieur (121) ;
un orifice de raccordement (180) de tuyau de gaz ;
un orifice de raccordement (190) de tuyau de liquide ; et
un dispositif de commande (300),
l'orifice de raccordement (190) de tuyau de liquide étant accouplé à un tuyau d'évacuation du premier compresseur (112) par l'intermédiaire du premier échangeur de chaleur extérieur (120) et de la première unité de commutation (117) et étant accouplé à un tuyau d'évacuation du deuxième compresseur (113) par l'intermédiaire du deuxième échangeur de chaleur extérieur (121) et de la deuxième unité de commutation (118),
**caractérisée en**
**ce que** le premier compresseur (112) et le deuxième compresseur (113) présentent un tuyau d'aspiration combiné ; et
**en ce que**, dans un fonctionnement en refroidissement, le dispositif de commande (300) amène la première unité de commutation (117) et la deuxième unité de commutation (118) à effectuer chacune une opération de commutation de telle sorte que l'orifice de raccordement (180) de tuyau de gaz est accouplé au tuyau d'aspiration combiné du premier et du deuxième compresseur (112, 113) par l'intermédiaire de la première et de la deuxième unité de commutation (117, 118).

2. Unité extérieure (100) selon la revendication 1, comprenant en outre :
un circuit de dérivation (140) qui relie un tuyau entre la première unité de commutation (117) et le premier échangeur de chaleur extérieur (120) à un tuyau entre la deuxième unité de commutation (118) et le deuxième échangeur de chaleur extérieur (121) ; et
une vanne marche-arrêt (141) qui commande un écoulement à travers le circuit de dérivation (140).

3. Unité extérieure (100) selon la revendication 2, une performance d'échange de chaleur par unité de surface du premier échangeur de chaleur extérieur (120) étant supérieure à une performance d'échange de chaleur par unité de surface du deuxième échangeur de chaleur extérieur (121) et
le dispositif de commande (300) ouvrant la vanne marche-arrêt (141) et fermant un deuxième détendeur (131) au niveau d'une sortie du deuxième échangeur de chaleur extérieur (121) pour amener à la fois le fluide frigorigène évacué par le premier compresseur (112) et le fluide frigorigène évacué par le deuxième compresseur (113) à effectuer un échange de chaleur dans le premier échangeur de chaleur extérieur (120) lorsque le premier compresseur (112) et le deuxième compresseur (113) sont tous deux actionnés à de basses fréquences de fonctionnement dans le fonctionnement en refroidissement.

4. Unité extérieure (100) selon la revendication 2 ou 3, le dispositif de commande (300) fermant la vanne marche-arrêt (141) pour amener le fluide frigorigène évacué par le premier compresseur (112) à effectuer un échange de chaleur dans le premier échangeur de chaleur extérieur (120) lorsque le premier compresseur (112) est actionné seul.

5. Unité extérieure (100) selon la revendication 2 ou 3, le dispositif de commande (300) ouvrant la vanne marche-arrêt (141) et fermant le deuxième détendeur (131) au niveau de la sortie du deuxième échangeur de chaleur extérieur (121) pour amener le fluide frigorigène évacué par le deuxième compresseur (113) à effectuer un échange de chaleur dans le premier échangeur de chaleur extérieur (120) lorsque le deuxième compresseur (113) est actionné seul.

6. Unité extérieure (100) selon la revendication 1, comprenant en outre :
un troisième échangeur de chaleur extérieur qui amène la chaleur perdue d'un moteur et le fluide frigorigène à échanger de la chaleur ;
un circuit de dérivation (140) qui relie un tuyau entre la première unité de commutation (117) et le premier échangeur de chaleur extérieur (120) à un tuyau entre la deuxième unité de commutation (118) et le deuxième échangeur de chaleur extérieur (121) ;
une vanne marche-arrêt (141) qui commande un écoulement à travers le circuit de dérivation (140) ;
un premier clapet de non-retour qui est disposé entre la première unité de commutation (117) et le premier échangeur de chaleur extérieur (120) et qui permet un écoulement uniquement dans un sens vers le premier échangeur de chaleur extérieur (120) et non dans un sens opposé au sens vers le premier échangeur de chaleur extérieur (120) ; et
un deuxième clapet de non-retour qui est disposé entre la première unité de commutation (117) et l'orifice de raccordement (180) de tuyau de gaz et qui permet un écoulement uniquement dans un sens vers l'orifice de raccordement (180) de tuyau de gaz et non dans un sens opposé au sens vers l'orifice de raccordement (180) de tuyau de gaz ;
un troisième clapet de non-retour qui est disposé entre la deuxième unité de commutation (118) et le deuxième échangeur de chaleur extérieur (121) et qui permet un écoulement uniquement dans un sens vers le deuxième échangeur de chaleur extérieur (121) et non dans un sens opposé au sens vers le deuxième échangeur de chaleur extérieur (121) ; et
un quatrième clapet de non-retour qui est disposé entre la deuxième unité de commutation (118) et l'orifice de raccordement (180) de tuyau de gaz et qui permet un écoulement uniquement dans un sens vers l'orifice de raccordement (180) de tuyau de gaz et non dans un sens opposé au sens vers l'orifice de raccordement (180) de tuyau de gaz, où,
dans un fonctionnement en dégivrage, le dispositif de commande (300) amène la première unité de commutation (117) et la deuxième unité de commutation (118) à effectuer chacune une opération de commutation et ouvre ou ferme la vanne marche-arrêt (141) de telle sorte que
l'orifice de raccordement (180) de tuyau de gaz est accouplé au tuyau d'évacuation du deuxième compresseur (113),
l'orifice de raccordement (190) de tuyau de liquide est accouplé au tuyau d'aspiration du premier compresseur (112) et au tuyau d'aspiration du deuxième compresseur (113) par l'intermédiaire du troisième échangeur de chaleur extérieur et
l'orifice de raccordement (190) de tuyau de liquide est accouplé au tuyau d'évacuation du premier compresseur (112) sélectivement par l'intermédiaire du deuxième échangeur de chaleur extérieur (121) et de la première unité de commutation (117) ou par l'intermédiaire du premier échangeur de chaleur extérieur (120) et de la première unité de commutation (117).

7. Unité extérieure (100) selon l'une quelconque des revendications 1 à 6, comprenant en outre :
un premier détendeur (130) qui règle une quantité du fluide frigorigène qui s'écoule à travers le premier échangeur de chaleur extérieur (120).

8. Procédé de commande d'un climatiseur comprenant
un premier compresseur (112),
un deuxième compresseur (113) qui présente une capacité inférieure à une capacité du premier compresseur (112), le premier compresseur (112) et le deuxième compresseur (113) présentant un tuyau d'aspiration combiné,
une première unité de commutation (117) qui commute un sens d'écoulement d'un fluide frigorigène évacué par le premier compresseur (112),
une deuxième unité de commutation (118) qui commute un sens d'écoulement du fluide frigorigène évacué par le deuxième compresseur (113),
un premier échangeur de chaleur extérieur (120),
un deuxième échangeur de chaleur extérieur (121),
un orifice de raccordement (180) de tuyau de gaz et
un orifice de raccordement (190) de tuyau de liquide,
le procédé comprenant :
dans un fonctionnement en refroidissement, le fait d'amener la première unité de commutation (117) et la deuxième unité de commutation (118) à effectuer chacune une opération de commutation de telle sorte que
l'orifice de raccordement (180) de tuyau de gaz est accouplé au tuyau d'aspiration combiné du premier et du deuxième compresseur (112, 113) par l'intermédiaire de la première et de la deuxième unité de commutation (117, 118) et
l'orifice de raccordement (190) de tuyau de liquide est accouplé à un tuyau d'évacuation du premier compresseur (112) par l'intermédiaire du premier échangeur de chaleur extérieur (120) et de la première unité de commutation (117) et est accouplé à un tuyau d'évacuation du deuxième compresseur (113) par l'intermédiaire du deuxième échangeur de chaleur extérieur (121) et de la deuxième unité de commutation (118).
